# EUROPÄISCHE PATENTSCHRIFT

(11) **EP 0 894 045 B1**
(45) Veröffentlichungstag und Bekanntmachung des Hinweises auf die Patenterteilung: **16.01.2002**
(21) Anmeldenummer: 98910679.4
(22) Anmeldetag: 16.02.1998
(51) Int. Cl.: B29C 49/36, B29C 49/42

(54) **BLASFORMMASCHINE**
BLOW MOULDING MACHINE
MACHINE A SOUFFLER

(30) Priorität: 17.02.1997 DE 19706182; 27.06.1997 DE 19727278
(43) Veröffentlichungstag der Anmeldung: 03.02.1999
(73) Patentinhaber: KRONES AG, 93068 Neutraubling (DE)
(72) Erfinder: WINTER, Horst, D-93073 Neutraubling (DE); GRIESBECK, Karl, D-93053 Regensburg (DE)
(74) Vertreter: Grünecker, Kinkeldey, Stockmair & Schwanhäusser Anwaltssozietät
(86) Internationale Anmeldenummer: EP9800868
(87) Internationale Veröffentlichungsnummer: WO9835815

(56) Entgegenhaltungen:
- FR-A- 2 700 293
- GB-A- 2 038 699
- GB-A- 2 074 496
- US-A- 4 589 837

## Beschreibung

Die Erfindung betrifft eine Blasformmaschine gemäß dem Oberbegriff des Anspruchs 1.

Derartige Blasformmaschinen sind in verschiedenen Ausführungen bekannt, wobei die Vorformlinge und die fertigen Hohlkörper, wie z.B. Flaschen, direkt (siehe GB 2 074496 A) oder mittelbar (siehe DE 27 42 693 C2) mit Hilfe von losen Dornen transportiert werden. In jedem Falle laufen das Heizrad und das Blasrad nebeneinander in einer gemeinsamen horizontalen Ebene um, ggf. unter Zwischenschaltung einer Transfervorrichtung für die erwärmten Vorformlinge. Dies führt zwangsläufig zu einer raumgreifenden Bauweise mit großer Grundfläche. Die Integration einer bekannten Blasformmaschine in eine Abfüllanlage für Flaschen oder dgl., wie sie aus Kostengründen immer häufiger praktiziert wird, oder gar der nachträgliche Einbau in eine vorhandene Abfüllanlage wird hierdurch stark erschwert.

Der Erfindung liegt die Aufgabe zugrunde, bei einer Blasformmaschine der eingangs genannten Art mit einfachen Mitteln den Platzbedarf spürbar zu senken.

Diese Aufgabe wird erfindungsgemäß durch die im Kennzeichen des Anspruchs 1 angegebenen Merkmale gelöst.

Bei einer erfindungsgemäßen Blasformmaschine wird je nach dem Grad der Überdeckung von Blasrad und Heizrad eine mehr oder weniger große Verringerung der Grundfläche erzielt, ohne daß es zu funktionellen Beeinträchtigungen kommt. Die geringe Vergrößerung der Bauhöhe wirkt sich an den üblichen Aufstellungsorten von Blasformmaschinen nicht störend aus. Die geringstmögliche Grundfläche wird erzielt, wenn sich Blasrad und Heizrad vollständig überdecken und vorzugsweise konzentrisch direkt übereinander umlaufen. Hierdurch ergibt sich auch eine nennenswerte Einsparung an Fertigungskosten durch entsprechende Verringerung der Bauteile für das Maschinengestell.

Im Nachstehenden werden zwei Ausführungsbeispiele der Erfindung anhand der Zeichnungen beschrieben. Es zeigen:
- Fig. 1: die Seitenansicht einer ersten Ausführungsform einer Blasformmaschine
- Fig. 2: die Draufsicht auf die Blasformmaschine nach Fig. 1
- Fig. 3: den Schnitt AA nach Fig. 1
- Fig. 4: eine vergrößerte Draufsicht auf die Transfervorrichtung der Blasformmaschine nach Fig. 1 bis 3
- Fig. 5: den Schnitt BB nach Fig. 4
- Fig. 6: einen senkrechten Schnitt durch eine zweite Ausführungsform einer Blasformmaschine im Bereich der Transfervorrichtung
- Fig. 7: die Draufsicht auf den oberen Rotor der Transfervorrichtung nach Fig. 6
- Fig. 8: die Seitenansicht des mittleren Rotors der Transfervorrichtung nach Fig. 6
- Fig. 9: die Draufsicht auf den unteren Rotor der Transfervorrichtung nach Fig. 6
- Fig.10: die schematische Darstellung des Antriebs der Blasmaschine nach Fig. 6 bis 9.

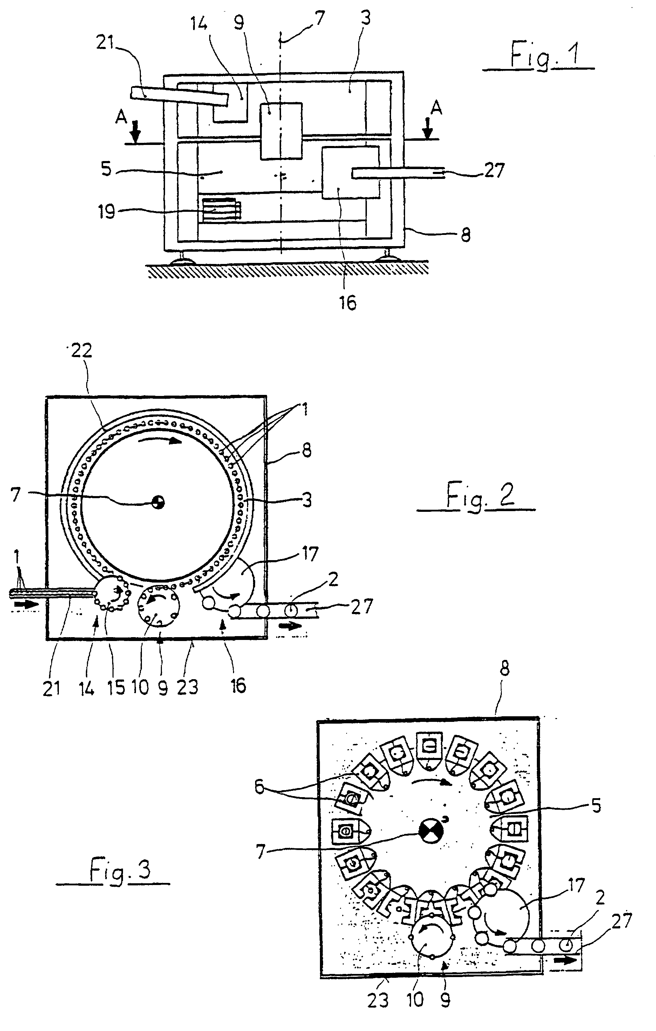

Die Blasformmaschine nach den Fig. 1 bis 5 ist zum Herstellen von Flaschen 2 für Getränke aus gespritzten Vorformlingen 1 aus thermoplastischem Kunststoff, z.B. PET, eingerichtet. Sie weist ein aus Stahlprofilen zusammengesetztes Gestell 8 mit kastenartiger Grundform auf, das eine senkrechte, hohle Mittelsäule 18 besitzt. Auf dieser ist auf einem unteren Niveau ein Blasrad 5 und darüber auf einem oberen Niveau ein Heizrad 3 auf dem Blasrad 5 jeweils drehbar gelagert. Die Wärme des Heizrads 3 kann somit ungehindert nach oben entweichen. Heizrad 3 und Blasrad 5 weisen eine gemeinsame Drehachse 7 auf und laufen in höhenversetzten horizontalen Ebenen um. Durch einen Motor 19 und ein mehrere Zahnräder aufweisendes Getriebe 20 werden Heizrad 3 und Blasrad 5 synchron zueinander, jedoch mit unterschiedlicher Drehzahl in Pfeilrichtung angetrieben. Das Blasrad 5 wird durch das Heizrad 3 vollständig abgedeckt. Die Grundfläche des Gestells 8 wird somit allein durch den Durchmesser des Heizrads 3 oder des Blasrads 5 definiert, je nachdem, welcher von beiden größer ist. Die Grundfläche ist im wesentlichen halb so groß wie bei einer herkömmlichen Blasformmaschine mit nebeneinander angeordnetem Blasrad und Heizrad.

Das Heizrad 3 weist auf seinem Teilkreis T gleichmäßig verteilt eine Vielzahl von drehbaren Aufnahmen 4 für die mit ihrer Öffnung nach unten weisenden Vorformlinge 1 in Form von durch eine stationäre Hubkurve 37 steuerbaren Spreizdornen auf. An deren Umlaufbahn sind stationäre Heiz- und Kühlstationen 22 angeordnet, durch welche die Vorformlinge 1 während ihrer Rotation mit dem Heizrad 3, das ihnen außerdem eine Eigenrotation auferlegt, auf Verarbeitungstemperatur erwärmt werden.

Im linken Bereich der Bedienungsseite 23 des Gestells 8 ist auf dem oberen Niveau des Heizrads 3 eine Zuführvorrichtung 14 für die Vorformlinge 1 vorgesehen. Diese besteht im wesentlichen aus einer nach unten geneigten Führungsrinne 21 für die mit ihrer fertig ausgeformten, einen Tragring aufweisenden Mündung nach oben weisenden Vorformlinge 1 und einem nachgeschalteten Wenderad 15. Dieses wird durch das Getriebe 20 synchron zum Heizrad 3 in Pfeilrichtung angetrieben. Es übernimmt die Vorformlinge 1 in der Normalposition, ggf. nach Eintaktung durch eine nicht gezeigte Förderschnecke, mittels steuerbarer Greifer, schwenkt die Vorformlinge um 180 Grad um ihre Querachse und führt sie mit der Öffnung nach unten in die Aufnahmen 4 des Heizrads 3 ein, wo sie durch deren steuerbare Spreizdorne fixiert werden.

Das Blasrad 5 weist auf seinem Teilkreis t gleichmäßig verteilt mehrere herkömmliche Blasstationen 6 zum Fertigblasen der Hohlkörper 2 aus den erwärmten Vorformlingen 1 auf. Jede Blasstation 6 weist eine klappbare, geteilte Blasform 24, eine kurvengesteuerte Reckstange 25 zum mechanischen Vorrecken und einen die Öffnung der Vorformlinge 1 gasdicht aufnehmenden Blasdorn 26 zum Zuführen der Blasluft auf. Die Blasformen 24 werden durch eine Kurvensteuerung 40 in der üblichen Weise im Aufnahme- und Abgabebereich der Vorformlinge 1 geöffnet und im eigentlichen Verformungsbereich geschlossen und verriegelt.

Im rechten Bereich der Bedienungsseite 23 des Gestells 8 ist auf dem unteren Niveau des Blasrads 5 eine Abfuhrvorrichtung 16 für die fertigen Hohlkörper 2 vorgesehen. Diese besteht im wesentlichen aus einem horizontalen Luftförderer 27, in dem die Hohlkörper 2 mit ihrem Tragring hängen, und einem vorgeschalteten Wenderad 17. Dieses wird durch das Getriebe 20 synchron zum Blasrad 5 in Pfeilrichtung angetrieben. Es übernimmt die mit der Mündung nach unten weisenden Flaschen 2 aus den geöffneten Blasformen 24 mittels steuerbarer Greifer, wendet sie um 180 Grad um ihre Querachse und führt sie in den Luftförderer 27 ein. Anschließend werden die Flaschen 2 beispielsweise zu einer nicht gezeigten Füll- und Verschließmaschine transportiert und mit einem Getränk gefüllt.

Im mittleren Bereich der Bedienungsseite 23 des Gestells 8 ist zwischen der Zufuhrvorrichtung 14 und der Abfuhrvorrichtung 16 eine Transfervorrichtung 9 für die Vorformlinge 1 vorgesehen, die sich über das obere Niveau des Heizrads 3 und das untere Niveau des Blasrads 5 erstreckt.

Die Transfervorrichtung 9 übernimmt die auf dem Kopf stehenden Vorformlinge 1 von den Aufnahmen 4 des Heizrads 3, senkt sie unter Beibehaltung ihrer senkrechten Position auf das Niveau des Blasrads 5 ab und führt sie den Blasdornen 26 der Blasstationen 6 zu. Während des Transfers wird außerdem die Teilung der Vorformlinge 1 - d.h. der Abstand der Mittelachsen zweier benachbarter Vorformlinge 1, gemessen auf ihrer Bewegungsbahn - von der kleineren Teilung auf dem Teilkreis T des Heizrads 3 auf die größere Teilung des Teilkreises t des Heizrades 5 vergrößert, der Abstand zwischen dem größeren Teilkreis T des Heizrads 3 und dem kleineren Teilkreis t des Blasrads 5 überbrückt und die Geschwindigkeit der Vorformlinge 1 entsprechend der wesentlich geringeren Drehzahl des Heizrads 3 an die Geschwindigkeit des mit höherer Drehzahl umlaufenden Blasrads 5 vergrößert. Die erwärmten Vorformlinge 1 werden somit schonend und zuverlässig auf relativ kurzem Weg vom Heizrad 3 zum Blasrad 5 überführt, wobei erforderlichenfalls eine zusätzliche Behandlung durch nicht gezeigte Heizorgane, Kühlorgane oder dgl. erfolgen kann oder auch eine Abschirmung gegen Wärmeverluste.

Die Transfervorrichtung 9 weist einen Rotor 10 mit senkrechter Drehachse auf, der in Pfeilrichtung, also mit entgegengesetztem Drehsinn wie Heizrad 3 und Blasrad 5 durch das Getriebe 20 synchron zu diesen antreibbar ist. Der käfigartige Rotor 10 weist zwei Gruppen von jeweils sechs Haltern für den Mündungsbereich der Vorformlinge 1 in Form von elastischen Schnappgreifern auf. Die erste Gruppe von Haltern 13 ist an der Deckplatte 28 des Rotors in einer horizontalen Ebene schwenkbar gelagert, während die zweite Gruppe von Haltern 11 auf stangenförmigen Führungen 12, die auf einer konzentrisch zur Drehachse des Rotors 10 angeordneten Kegelfläche angeordnet ist, höhenverschiebbar geführt ist. Die Steuerung der Schwenkbewegung der Halter 13 erfolgt durch eine stationäre Nutkurve 29 in einer Kurvenscheibe 30, in welche die Halter 11 mittels Rollenhebeln 31 eingreifen. Die Steuerung der Hubbewegung der Halter 11 erfolgt durch eine stationäre Hubkurve 32 in einem konischen Kurvenkörper 33, in welche die Halter 11 mittels Kurvenrollen 34 eingreifen. Die Kurvenscheibe 30 und der Kurvenkörper 33 sind innerhalb des Rotors 10 angeordnet und drehfest mit dem Gestell 8 verbunden, während der Rotor 10 drehbar auf dem Gestell 8 gelagert ist.

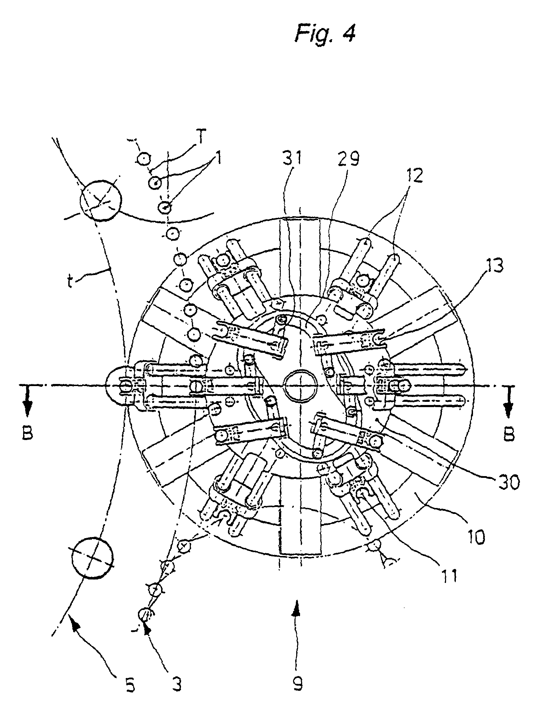

Wie insbesondere die Fig. 4 zeigt, überlagern sich die Bewegungsbahnen der oberen Halter 13 mit den unteren Haltern 11 an der vom Heizrad 3 und Blasrad 5 entfernten Seite ihrer Umlaufbahn. Dabei bewirken die oberen Halter 11 einen großen Teil der Teilungsvergrößerung und Beschleunigung der Vorformlinge ohne Höhenbewegung, während die unteren Halter 13 die gesamte Höhenbewegung übernehmen und gleichzeitig aufgrund der konischen Bewegungsbahn eine Vergrößerung der Teilung und Geschwindigkeit auf das durch das Blasrad 5 vorgegebene Maß bewerkstelligen. Eine Steuerung der Halter 11 und 13 hinsichtlich ihrer Greiffunktion ist nicht unbedingt erforderlich, da diese elastische Greifzangen aufweisen, welche sich beim Aufschieben auf einen Vorformling 1 und beim Abziehen automatisch öffnen. Es kann jedoch zweckmäßig sein, die oberen und/oder unteren Halter 13, 11 mittels einer weiteren Kurvensteuerung 39 radial verschiebbar zu gestalten, um die gegenseitige Übergabe bzw. die Übernahme von den Aufnahmen 4 und Übergabe an die Blasdorne 26 zu erleichtern. Wie die Fig. 4 zeigt, erfolgt die gegenseitige Übergabe zwischen den Haltern 11, 13 auf dem oberen Niveau des Heizrads 3. Danach beginnen die Halter 11 ihre Absenkbewegung auf das Niveau des Blasrads und ihre Annäherung an dessen Teilkreis t.

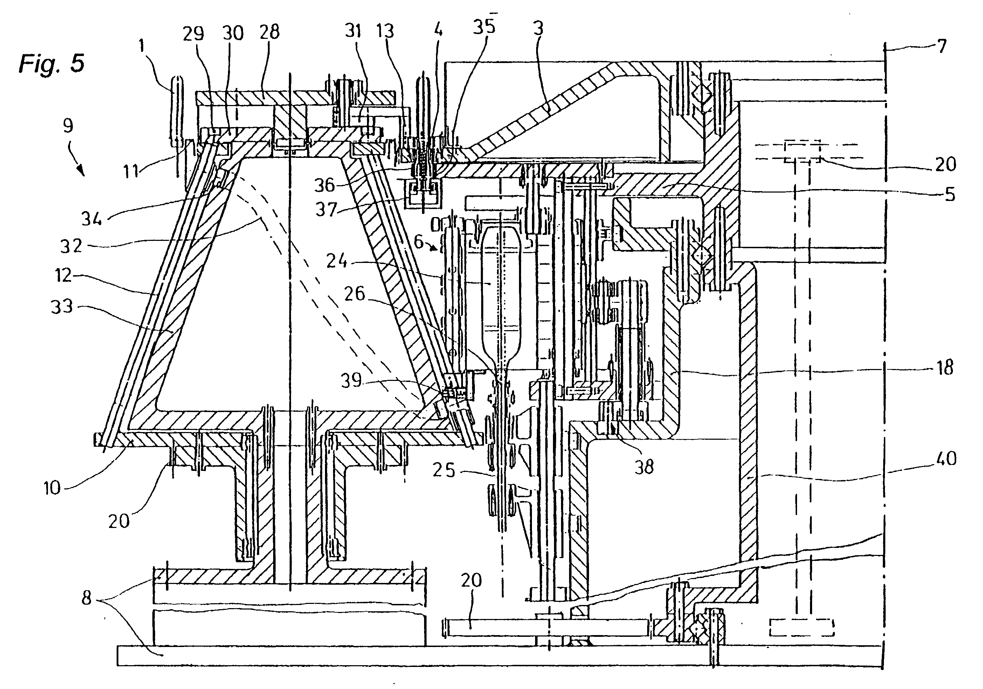

Wie insbesondere die Fig. 5 zeigt, ist das Blasrad 5 auf einer Hohlwelle 40 befestigt, die mittels zweier Wälzlager drehbar am Gestell 8 bzw. dessen hohler Mittelsäule 18 drehbar gelagert ist. Die Mittelsäule 18 ist an ihrer Außenseite mit stationären Steuerkurven für die Kurvensteuerung 38, für die Höhenbewegung der Blasdorne 26, der Reckstangen 25, des Bodenstücks der Blasformen 24 usw. versehen.

Das Heizrad 3 ist mittels eines weiteren Wälzlagers am oberen Ende des Blasrads 5 bzw. dessen Hohlwelle 40 drehbar gelagert, so daß das Heizrad 3 und das Blasrad 5 unabhängig voneinander um die gemeinsame senkrechte Drehachse 7 rotieren können.

Der Antrieb des Blasrads 5 erfolgt durch das Getriebe 20 über eine am unteren Ende der Hohlwelle 40 angeordnete Verzahnung; der Antrieb des Heizrads 3 erfolgt über eine an seinem äußeren Rand ausgebildete Verzahnung durch ein Zahnrad und eine im wesentlichen senkrechte Welle des Getriebes 20.

Im oberen Bereich des Blasrads 5 ist konzentrisch zur Drehachse 7 ein Zahnkranz 35 dicht unter dem Heizrad 3 befestigt. Dieser kämmt mit Ritzeln 36, die jeweils drehfest mit einer Aufnahme 4 des Heizrads 3 verbunden sind. Die Aufnahmen 4 sind ihrerseits drehbar im Heizrad 3 gelagert, und zwar um parallel zur Drehachse 7 angeordnete Achsen. Aufgrund der unterschiedlichen Drehzahl von Blasrad 5 und Heizrad 3 wirkt der Zahnkranz 35 mit den Ritzeln 36 als Planetengetriebe, welches die Aufnahmen 4 im Betrieb der Blasformmaschine in Eigenrotation versetzt. Dies ist erforderlich, um ein gleichmäßiges Erwärmen der Vorformlinge 1 durch die Heiz- und Kühlstationen 22 zu ermölichen.

Die Zuführung der Arbeitsmedien, wie Kühlwasser, Druckluft usw., zu den Blasstationen 6 erfolgt durch nicht gezeigte Drehverteiler im inneren der Hohlwelle 40 und durch im Heizrad 3 radial nach außen geführte, gleichfalls nicht gezeigte Kanäle.

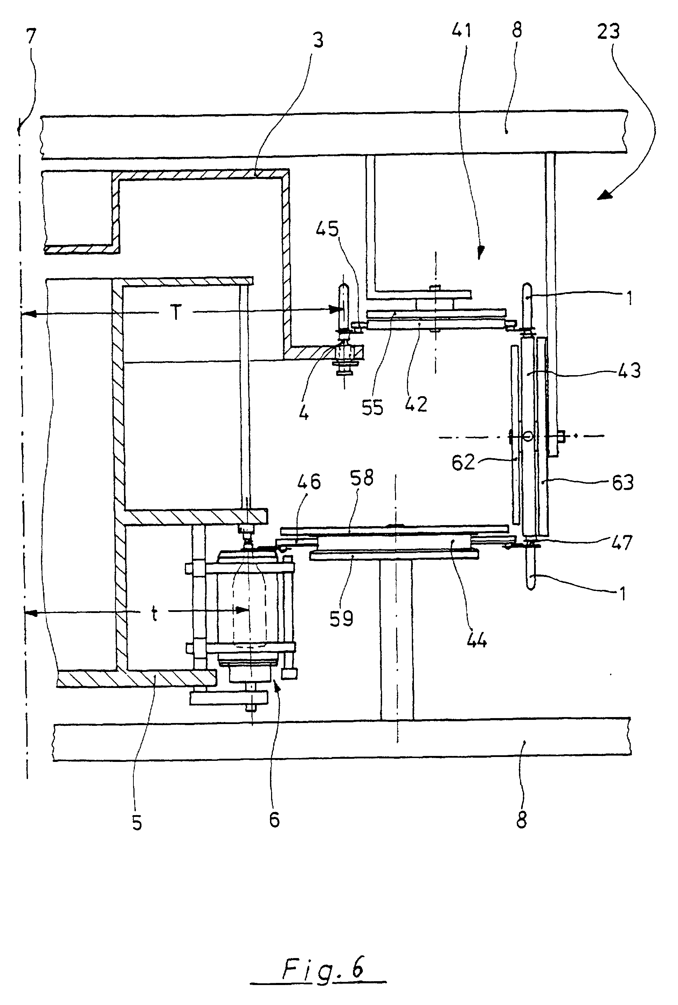

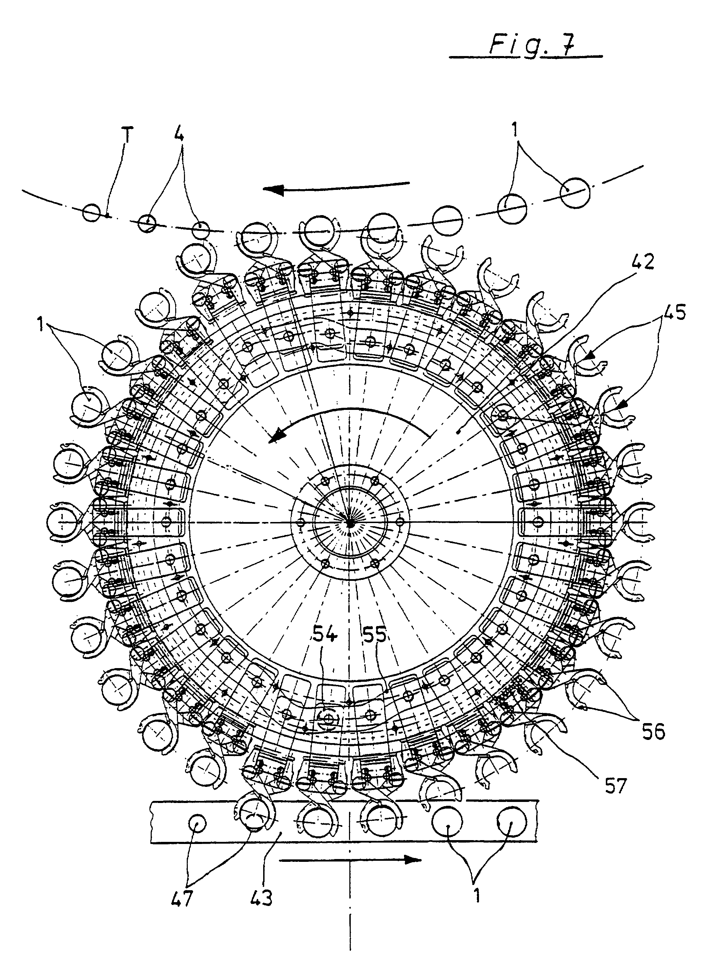

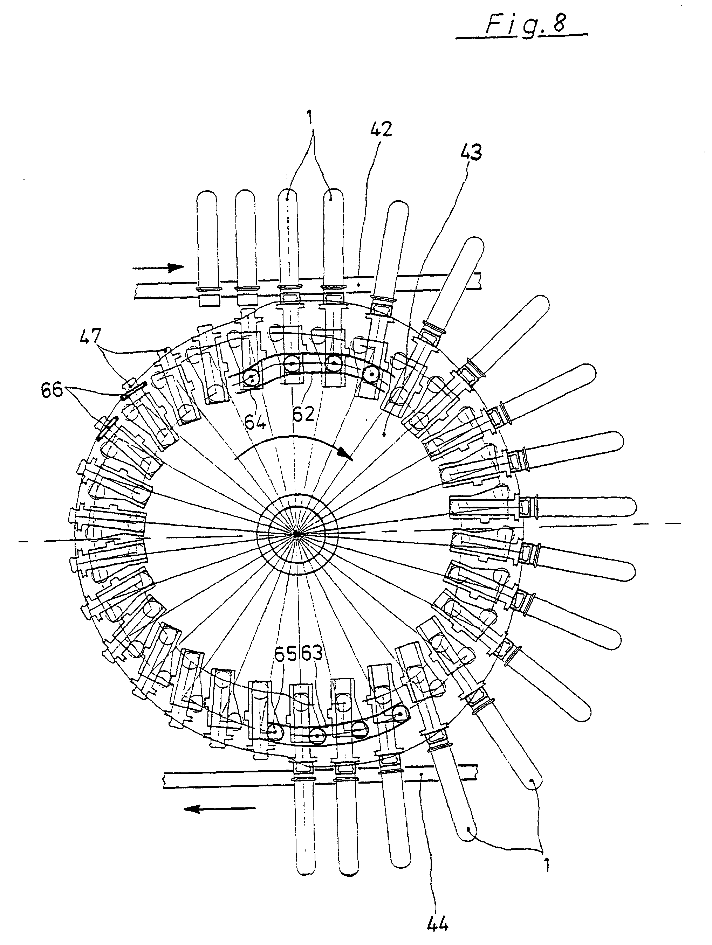

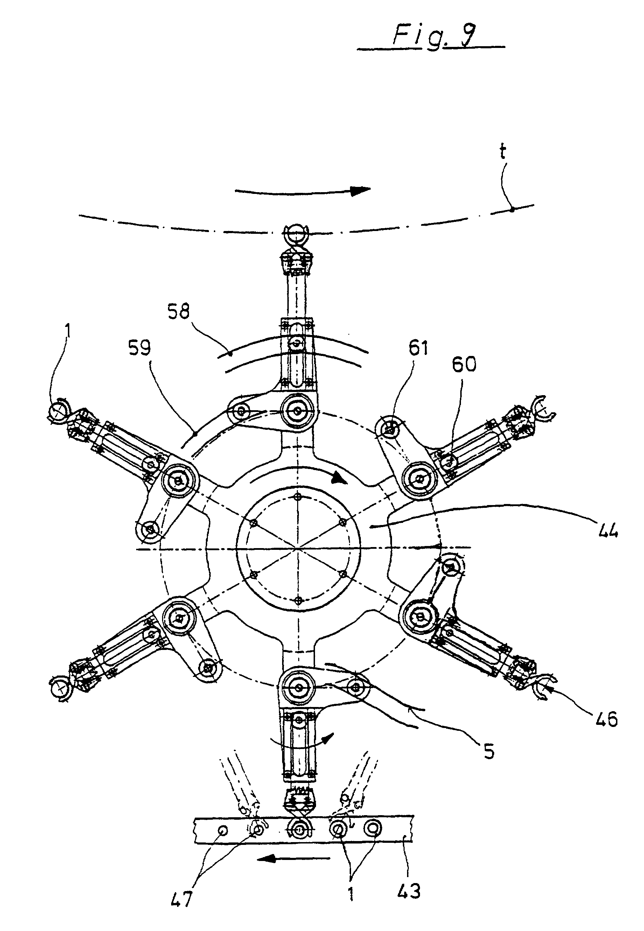

Die Blasformmaschine nach Fig. 6 bis 10 weist ein Gestell 8 auf, in dem ein Heizrad 3 und darunter ein Blasrad 5 um eine gemeinsame senkrechte Drehachse 7 in höhenversetzten horizontalen Ebenen umlaufen. Das Heizrad 3 weist auf seinem Teilkreis T gleichmäßig verteilt eine Vielzahl von drehbaren Aufnahmen 4 für die Vorformlinge 1 auf, an deren Umlaufbahn nicht gezeigte stationäre Heiz- und Kühlstationen angeordnet sind. Das Blasrad 5 weist auf seinem Teilkreis t gleichmäßig verteilt mehrere Blasstationen 6 zum Fertigblasen der Hohlkörper aus den erwärmten Vorformlingen 1 auf.

Im mittleren Bereich der Bedienungsseite 23 des Gestells 8 ist zwischen der Zuführvorrichtung 14 für die Vorformlinge 1 zum Heizrad 3 und der Abfuhrvorrichtung 16 für die fertigen Hohlkörper vom Blasrad 5 eine Transfervorrichtung 41 für die Vorformlinge 1 vorgesehen, die sich vom oberen Niveau des Heizrads 3 zum unteren Niveau des Blasrads 5 erstreckt. Die Transfervorrichtung 41 übernimmt die auf dem Kopf stehenden Vorformlinge 1 von den Aufnahmen 4 des Heizrads 3, senkt sie unter Wendung um 180 Grad auf das Niveau des Blasrads 5 ab und führt sie dessen Blasstationen 6 zu, in denen die Hohlkörper bzw. Flaschen in ihrer aufrechten Normalposition fertiggestellt werden. Während des Transfers wird außerdem die Teilung der Vorformlinge 1 von der kleineren Teilung auf dem Teilkreis T des Heizrads 3 auf die größere Teilung des Teilkreises t des Blasrads 5 vergrößert, der Abstand zwischen dem größeren Teilkreis T des Heizrads 3 und dem kleineren Teilkreis t des Blasrads 5 überbrückt und die Geschwindigkeit der Vorformlinge 1 entsprechend der wesentliche geringeren Drehzahl des Heizrads 3 an die Geschwindigkeit des mit höherer Drehzahl umlaufenden Blasrads 5 vergrößert. Die erwärmten Vorformlinge 1 werden so schonend und zuverlässig auf kurzem Weg vom Heizrad 3 zum Blasrad 5 überführt, wobei erforderlichenfalls eine zusätzliche Behandlung durch nicht gezeigte Heizorgane, Kühlorgane oder dgl. erfolgen kann oder auch eine Abschirmung gegen Wärmeverluste und/oder eine Eigenrotation der Vorformlinge 1.

Die Transfervorrichtung 41 weist insgesamt drei scheibenartige Rotoren 42, 43, 44 auf, die funktionsmäßig hintereinander geschaltet sind und sowohl untereinander als auch zum Heizrad 3 und Blasrad 5 synchron angetrieben sind.

Der obere Rotor 42 läuft auf Höhe des Heizrads 3 in einer horizontalen Ebene mit entgegengesetztem Drehsinn um. Er ist am Umfang mit einer Vielzahl gleichmäßig verteilter Greifzangen 45 versehen, die radial verschiebbar gelagert sind. Jede Greifzange 45 greift mit einer Kurvenrolle 54 in eine stationäre, in sich geschlossene Nutkurve 55 ein, welche die Relativbewegung bzw. Relativposition der Greifzangen 45 bei einer Rotation des Rotors 42 steuert. Die Greifzangen 45 selbst weisen je zwei scherenartig schwenkbare Greifarme 56 auf, die unter dem Einfluss von Federn 57 im Schließsinne vorgespannt sind. Die Enden der Greifarme 56 sind abgeschrägt, so dass sie sich beim Aufschieben auf einen Vorformling 1 bzw. beim Abziehen von einem Vorformling 1 selbsttätig öffnen und schließen.

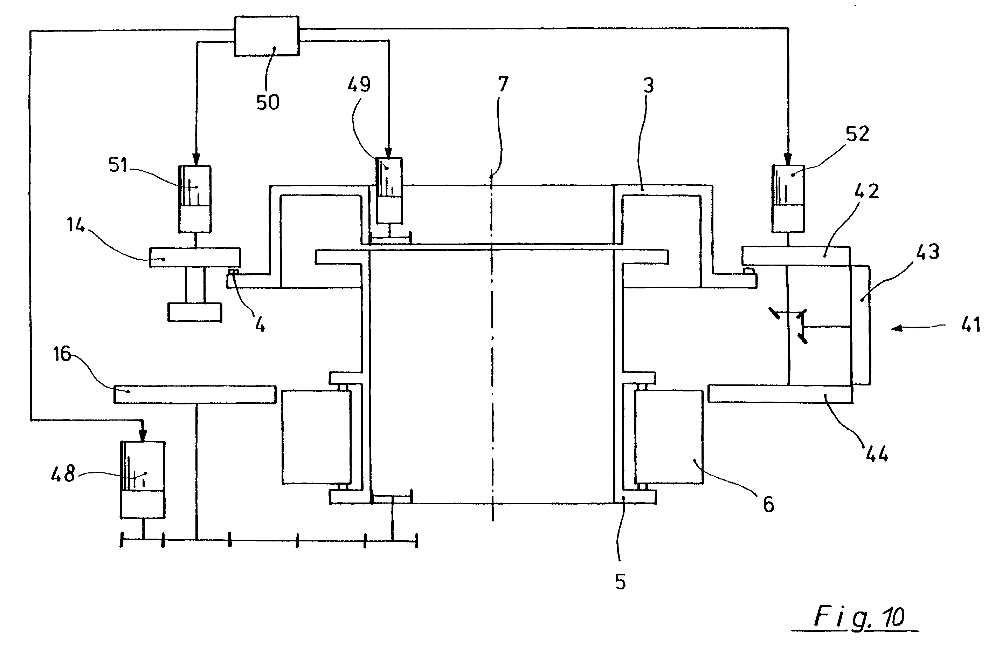

Der untere Rotor 44 läuft auf Höhe des Blasrads 5 in einer horizontalen Ebene mit entgegengesetztem Drehsinn um. Er weist einen größeren Durchmesser auf als der obere Rotor 42 und ist wie dieser am Umfang mit Greifzangen 46 bestückt, deren Anzahl jedoch geringer ist als beim oberen Rotor 42. Die Greifzangen 46 sind im wesentlichen radial verschiebbar in Winkelhebeln 53 gelagert, die ihrerseits schwenkbar am Rotor 44 gelagert sind. Die Radialbewegung und die Schwenkbewegung der Greifzangen 46 wird durch zwei separate,in sich geschlossene, stationäre Nutkurven 58, 59 gesteuert, in die an den Winkelhebeln 53 bzw. an den Greifzangen 46 befestigte Kurvenrollen 60, 61 eingreifen. In Fig. 9 sind die Winkelhebel 53 und Greifzangen 46 in ihrer radialen Mittellage dargestellt, in welcher die Teilung der Greifzangen 46 der Teilung der Blasstationen 6 auf dem Blasrad 5 entspricht. Durch die beiden Nutkurven 58, 59 können die Greifzangen 46 bei einem Umlauf des Rotors 44 relativ bewegt werden, wodurch sowohl die Teilung als auch die Geschwindigkeit der Greifzangen 46 verändert und ihre Greifbewegung gesteuert wird. Die angenäherte Stellung zweier Greifzangen 46 bei der Übernahme der Vorformlinge 1 vom mittleren Rotor 43 ist strichpunktiert angedeutet.

Der mittlere Rotor 43 läuft zwischen dem Niveau des Heizrads 3 und dem Niveau des Blasrads 5 in einer senkrechten Ebene um, wobei sein oberer Umlaufbereich den äußeren Umlaufbereich des oberen Rotors 42 und sein unterer Umlaufbereich den äußeren Umlaufbereich des unteren Rotors 44 tangiert. Die Drehrichtung des mittleren Rotors 43 ist derart, dass in den tangierenden Umlaufbereichen seine Umlaufbewegung mit dem oberen Rotor 42 bzw. dem unteren Rotor 44 übereinstimmt, wobei Heizrad 3 und Blasrad 5 mit entgegengesetztem Drehsinn umlaufen.

Der mittlere Rotor 43 ist am Umfang gleichmäßig mit Haltedornen 47 ausgestattet, die sowohl schwenkbar als auch im wesentlichen radial verschiebbar gelagert sind. Durch zwei stationäre, in sich geschlossene Nutkurven 62, 63, in welche mit den Haltedornen 47 verbundene Kurvenrollen 64, 65 eingreifen, wird die Bewegung bzw. Position der Haltedorne 47 bei einem Umlauf des mittleren Rotors 43 gesteuert. Die Haltedorne 47 sind an den Innendurchmesser der Vorformlinge 1 angepasst, um diese mittels Reibschluss sicher zu fixieren.

Die Ausbildung der stationären Nutkurven 55, 58, 59, 62 und 63 ist derart, dass sich die im Vorstehenden beschriebene Funktion der Transfervorrichtung 41 ergibt, wobei die drei Rotoren 42, 43, 44 kontinuierlich umlaufen, genauso wie das Heizrad 3 und das Blasrad 5. Dabei dient die Radialbewegung der Greifzangen 45 des ersten Rotors 42 zum Erfassen der Vorformlinge 1 auf den Aufnahmen 4 des Heizrads 3 und zur Anpassung an die Umlaufbahn der Haltedorne 47 des mittleren Rotors 43. Die Schwenk- und Hubbewegung der Haltedorne 47 des mittleren Rotors 43 dient zum Einführen der Haltedorne 47 in die noch von den Greifzangen 45 gehaltenen Vorformlinge 1 und zum Herausziehen der Haltedorne 47 aus den bereits von den Greifzangen 46 des unteren Rotors 44 erfassten Vorformlingen 1. Die Schwenk- und Hubbewegung der Greifzangen 46 des unteren Rotors 44 schließlich dient zum Beschleunigen und Auseinanderziehen der Vorformlinge 1 auf die größere Geschwindigkeit des Blasrads 5 und dessen größere Teilung entsprechend der Teilung der Blasstationen 6. Während des gesamten Transfers werden die erwärmten Vorformlinge 1 ausschließlich in dem relativ kalten Bereich überhalb des Tragrings von außen oder innen erfasst und jederzeit exakt form- und/oder reibschlüssig fixiert.

Erforderlichenfalls können die Vorformlinge 1 im Bereich des mittleren Rotors 43 gedreht werden, indem die Haltedorne 47 um ihre Mittelachsen drehbar gelagert und mittels Reibräder 66 in Rotation versetzt werden. Einem Verformen der Vorformlinge 1 während der Schwenkbewegung um 180 Grad im Bereich des mittleren Rotors 43 wird dadurch zuverlässig entgegengewirkt. Die Reibräder 66 greifen an der Seitenfläche einer stationären Scheibe an, in der die Nutkurve 63 ausgebildet ist.

Wie die Fig. 10 zeigt, wird die vorbeschriebene Blasformmaschine durch insgesamt vier frequenzgesteuerte Synchronmotoren angetrieben. Der erste Synchronmotor 48 treibt das Blasrad 5 und die Abfuhrvorrichtung 16 an; der zweite Synchronmotor 49 treibt das Heizrad 3 an; der dritte Synchronmotor 51 treibt die Zufuhrvorrichtung 14 an; der vierte Synchronmotor 52 treibt die Transfervorrichtung 41 an.

Alle Synchronmotoren 48, 49, 51, 52 weisen Läufer mit stark permanent erregten Polen auf, wobei als Magnetmaterial hochpermeable Werkstoffe verwendet werden. Die daraus resultierende hohe Remanenzflussdichte ermöglicht sehr große synchrone Drehmomente mit erheblicher Überlastfähigkeit. Die Sychronmotoren 48, 49, 51, 52 sind eingangsseitig spannungsausfallsicher elektrisch gekoppelt. Durch diese Verbindung ist selbst bei einem Spannungsausfall ein winkelsynchrones Auslaufen sichergestellt.

Das Drehfeld zum Antrieb der Synchronmotoren 48, 49, 51, 52 geht von einem gemeinsamen Frequenzumrichter 50 aus, an dem die gewünschte Geschwindigkeit für den Antrieb der Blasformmaschine eingestellt wird. Der Stellbereich der Ausgangsfrequenz des Frequenzumrichters 50 reicht von Null Hertz bis beispielsweise 120 Hertz.

Der vorbeschriebene Mehrmotorenantrieb der Blasformmaschine mit einem einzigen Frequenzumrichter ermöglicht einerseits einen Verzicht auf viele herkömmliche Getriebeelemente und andererseits einen Verzicht auf eine aufwendige elektronische Steuerung für den Synchronlauf der Motoren. Er trägt somit zur besonders kompakten und kostengünstigen Bauweise einer erfindungsgemäßen Blasformmaschine bei.

## Patentansprüche

1. Blasformmaschine mit einem mehrere Aufnahmen (4) für Vorformlinge (1) aufweisenden Heizrad (3) mit im wesentlichen senkrechter Drehachse und einem mehrere Blasstationen (6) für Hohlkörper (2) aufweisenden Blasrad (5) mit im wesentlichen senkrechter Drehachse, **dadurch gekennzeichnet, daß** das Heizrad (3) und das Blasrad (5) in unterschiedlichen Höhenlagen angeordnet sind und sich zumindest teilweise überdecken.

2. Blasformmaschine nach Anspruch 1, **dadurch gekennzeichnet, daß** das Heizrad (3) höher angeordnet ist als das Blasrad (5) und dieses im wesentlichen vollständig überdeckt.

3. Blasformmaschine nach Anspruch 1 oder 2, **dadurch gekennzeichnet, daß** das Heizrad (3) und das Blasrad (5) konzentrisch angeordnet sind.

4. Blasformmaschine nach einem der Ansprüche 1 bis 3, **dadurch gekennzeichnet, daß** das Heizrad (3) und das Blasrad (5) mit gleicher Drehrichtung und unterschiedlicher Drehzahl synchron antreibbar sind.

5. Blasformmaschine nach einem der Ansprüche 1 bis 4, **dadurch gekennzeichnet, daß** das Heizrad (3) einen größeren Durchmesser aufweist als das Blasrad (5).

6. Blasformmaschine nach einem der Ansprüche 1 bis 5, **dadurch gekennzeichnet, daß** das Heizrad (3) und das Blasrad (5) in einem gemeinsamen Gestell (8) angeordnet sind.

7. Blasformmaschine nach einem der Ansprüche 1 bis 6, **dadurch gekennzeichnet, daß** die Teilung der Aufnahmen (4) des Heizrads (3) kleiner ist als die Teilung der Blasstationen (6) des Blasrads (5).

8. Blasformmaschine nach einem der Ansprüche 1 bis 7, **gekennzeichnet durch** eine Transfervorrichtung (9), welche die Vorformlinge vom Niveau des Heizrads (3) auf das Niveau des Blasrads (5) bringt.

9. Blasformmaschine nach Anspruch 8, **dadurch gekennzeichnet, daß** die Transfervorrichtung (9) die Teilung der Vorformlinge vergrößert.

10. Blasformmaschine nach Anspruch 8 oder 9, **dadurch gekennzeichnet, daß** die Transfervorrichtung (9) einen Rotor (10) mit im wesentlichen parallel zur Drehachse (7) des Heizrads (3) und des Blasrads (5) angeordneter Drehachse aufweist, der synchron zu diesen mit entgegengesetzter Drehrichtung antreibbar ist.

11. Blasformmaschine nach Anspruch 10, **dadurch gekennzeichnet, daß** der Rotor (10) mit gesteuert höhenbeweglichen Haltern (11) für die Vorformlinge bestückt ist.

12. Blasformmaschine nach Anspruch 11, **dadurch gekennzeichnet, daß** die höhenbeweglichen Halter (11) auf Führungen (12) gelagert sind, die auf einem konzentrisch zur Drehachse des Rotors (10) angeordneten Kegelmantel angeordnet sind.

13. Blasformmaschine nach einem der Ansprüche 10 bis 12, **dadurch gekennzeichnet, daß** der Rotor (10) mit in Umlaufrichtung gesteuert schwenkbaren Haltern (13) für die Vorformlinge bestückt ist.

14. Blasformmaschine nach einem der Ansprüche 8 bis 13, **dadurch gekennzeichnet, daß** an der Umlaufbahn des Heizrads (3) vor der Transfervorrichtung (9) eine Zufuhrvorrichtung (14) für die Vorformlinge angeordnet ist.

15. Blasformmaschine nach Anspruch 14, **dadurch gekennzeichnet, daß** die Zufuhrvorrichtung (14) ein Wenderad (15) aufweist, welches die Vorformlinge in aufrechter Normalposition übernimmt, um 180 Grad verschwenkt, und mit der Öffnung nach unten an die Aufnahmen (4) des Heizrads (3) übergibt.

16. Blasformmaschine nach einem der Ansprüche 8 bis 15, **dadurch gekennzeichnet, daß** an der Umlaufbahn des Blasrads (5) nach der Transfervorrichtung (9) eine Abfuhrvorrichtung (16) für die fertigen Hohlkörper angeordnet ist.

17. Blasformmaschine nach Anspruch 16, **dadurch gekennzeichnet, daß** die Abfuhrvorrichtung (16) ein Wenderad (17) aufweist, welches die fertigen Hohlkörper mit der Öffnung nach unten aus den Blasstationen (6) entnimmt, um 180 Grad verschwenkt und in aufrechter Normalposition abgibt.

18. Blasformmaschine nach einem der Ansprüche 8 bis 17, **dadurch gekennzeichnet, daß** die Transfervorrichtung (9) zwischen der Zufuhrvorrichtung (14) und der Abfuhrvorrichtung (16) angeordnet ist, vorzugsweise an der Bedienungsseite (23) des Gestells (8).

19. Blasformmaschine nach einem der Ansprüche 3 bis 18, **dadurch gekennzeichnet, daß** das Blasrad (5) drehbar am Gestell (8) und/oder an einer mit diesen verbundenen Mittelsäule (18) und das Heizrad (3) am Blasrad (5) jeweils drehbar gelagert ist.

20. Blasformmaschine nach Anspruch 19, **dadurch gekennzeichnet, daß** am Blasrad (5) ein Zahnkranz (35) ausgebildet ist, in dem drehfest mit den drehbaren Aufnahmen (4) des Heizrads (3) verbundene Ritzel (36) eingreifen.

21. Blasformmaschine nach einem der Ansprüche 8 bis 20, **dadurch gekennzeichnet, dass** die Transfervorrichtung (41) mindestens drei hintereinander geschaltete, synchron antreibbare Rotoren (42, 43, 44) aufweist, wovon der erste Rotor (42) die Vorformlinge vom Heizrad (3) übernimmt, der letzte Rotor (44) die Vorformlinge an das Blasrad (5) übergibt und jeder dazwischenliegende Rotor (43) zumindest teilweise die Höhenlage der Vorformlinge verändert.

22. Blasformmaschine nach Anspruch 21, **dadurch gekennzeichnet, dass** der erste Rotor (42) auf Höhe des Heizrads (3) in einer im wesentlichen horizontalen Ebene umläuft, dass der letzte Rotor (44) auf Höhe des Blasrads (5) in einer im wesentlichen horizontalen Ebene umläuft, und dass jeder dazwischenliegende Rotor (43) in einer im wesentlichen senkrechten Ebene umläuft.

23. Blasformmaschine nach Anspruch 21 oder 22, **dadurch gekennzeichnet, dass** der erste und der letzte Rotor (42, 44) mit Greifzangen (45, 46) und mindestens ein dazwischenliegender Rotor (43) mit Haltedornen (47) für die Vorformlinge versehen ist.

24. Blasformmaschine nach Anspruch 23, **dadurch gekennzeichnet, dass** die Greifzangen (45, 46) und Haltedorne (47) in der Umlaufebene ihres Rotors (42, 43, 44) relativ zu diesem gesteuert beweglich sind.

25. Blasformmaschine nach Anspruch 24, **dadurch gekennzeichnet, dass** die Greifzangen (45) des ersten Rotors (42) radial verschiebbar gelagert sind.

26. Blasformmaschine nach Anspruch 24 oder 25, **dadurch gekennzeichnet, dass** die Greifzangen (46) des letzten Rotors (44) radial verschiebbar und verschwenkbar gelagert sind.

27. Blasformmaschine nach einem der Ansprüche 24 bis 26, **dadurch gekennzeichnet, dass** die Haltedorne (47) eines dazwischenliegenden Rotors (43) radial verschiebbar und schwenkbar gelagert sind.

28. Blasformmaschine nach einem der Ansprüche 21 bis 27, **dadurch gekennzeichnet, dass** die Teilungsvergrößerung der Vorformlinge überwiegend durch den letzten Rotor (44) erfolgt.

29. Blasformmaschine nach einem der Ansprüche 1 bis 28, **dadurch gekennzeichnet, dass** das Heizrad (3) und das Blasrad (5) jeweils von einem eigenen frequenzgesteuerten Synchronmotor (48, 49) angetrieben sind und die Synchronmotoren (48, 49) an einen gemeinsamen Frequenzumrichter (50) angeschlossen sind.

30. Blasformmaschine nach Anspruch 29, **dadurch gekennzeichnet, dass** die Zufuhrvorrichtung (14) und/oder die Abfuhrvorrichtung (16) und/oder die Transfervorrichtung (41) jeweils von einem eigenen frequenzgesteuerten Synchronmotor (51, 52) angetrieben werden, die an den gemeinsamen Frequenzumrichter (50) angeschlossen sind.

31. Blasformmaschine nach Anspruch 29 oder 30, **dadurch gekennzeichnet, dass** der Frequenzstellbereich des Frequenzumrichters (50) bis Null Hertz reicht.

32. Blasformmaschine nach einem der Ansprüche 23 bis 31, **dadurch gekennzeichnet, dass** die Haltedorne (47) um ihre Mittelachsen rotierend antreibbar sind.

## Claims

1. A blow moulding machine comprising a heating wheel (3) provided with a plurality of reception means (4) for preforms (1) and having a substantially vertical axis of rotation, and a blow wheel (5) provided with a plurality of blow stations (6) for hollow bodies (2) and having a substantially vertical axis of rotation, **characterized in that** the heating wheel (3) and the blow wheel (5) are arranged on different levels and overlap each other at least partially.

2. A blow moulding machine according to claim 1, **characterized in that** the heating wheel (3) is arranged on a higher level than the blow wheel (5) and covers said blow wheel (5) essentially completely.

3. A blow moulding machine according to claim 1 or 2, characterized in that the heating wheel (3) and the blow wheel (5) are arranged concentrically.

4. A blow moulding machine according to one of the claims 1 to 3, **characterized in that** the heating wheel (3) and the blow wheel (5) are adapted to be driven synchronously in the same direction of rotation and at different speeds.

5. A blow moulding machine according to one of the claims 1 to 4, **characterized in that** the heating wheel (3) has a larger diameter than the blow wheel (5).

6. A blow moulding machine according to one of the claims 1 to 5, **characterized in that** the heating wheel (3) and the blow wheel (5) are arranged in a common frame (8).

7. A blow moulding machine according to one of the claims 1 to 6, **characterized in that** the spacing of the reception means (4) of the heating wheel (3) is smaller than the spacing of the blow stations (6) of the blow wheel (5).

8. A blow moulding machine according to one of the claims 1 to 7, **characterized by** a transfer device (9) by means of which the preforms (1) are transferred from the level of the heating wheel (3) to the level of the blow wheel (5).

9. A blow moulding machine according to claim 8, **characterized in that** the transfer device (9) enlarges the spacing of the preforms.

10. A blow moulding machine according to claim 8 or 9, characterized in that the transfer device (9) comprises a rotor (10) whose axis of rotation extends substantially. parallel to the axis of rotation (7) of the heating wheel (3) and of the blow wheel (5), said rotor (10) being adapted to be driven in synchronism with said heating wheel (3) and said blow wheel (5) and in a direction of rotation opposite to that of said wheels.

11. A blow moulding machine according to claim 10, **characterized in that** the rotor (10) is equipped with holders (11) for the preforms, said holders (11) being vertically movable in a controlled manner.

12. A blow moulding machine according to claim 11, **characterized in that** the vertically movable holders (11) are supported on guide means (12) which are arranged on a conical surface disposed concentrically with the axis of rotation of the rotor (10).

13. A blow moulding machine according to claims 10 to 12,
**characterized in that** the rotor (10) is equipped with holders (13) for the preforms, said holders (13) being adapted to be pivoted in the direction of rotation in a controlled manner.

14. A blow moulding machine according to one of the claims 8 to 13, **characterized in that** a supply device (14) for the preforms is provided on the rotary path of the heating wheel (3) in front of the transfer device (9).

15. A blow moulding machine according to claim 14, **characterized in that** the supply device (14) is provided with a turning wheel (15) which takes over the preforms at an upright normal position, pivots them by 180°, and transfers them to the reception means (4) of the heating wheel (3) such that the openings of said preforms are directed downwards.

16. A blow moulding machine according to one of the claims 8 to 15, **characterized in that** a discharge device (16) for the finished hollow bodies is arranged on the rotary path of the blow wheel (5) after the transfer device (9) .

17. A blow moulding machine according to claim 16, **characterized in that** the discharge device (16) is provided with a turning wheel (17) which removes the finished hollow bodies from the blow stations (6) with the openings of said hollow bodies facing downwards, turns them by 180° and discharges them at an upright normal position.

18. A blow moulding machine according to one of the claims 8 to 17, **characterized in that** the transfer device (9) is arranged between said supply device (14) and said discharge device (16), preferably on the operating side (23) of the frame (8).

19. A blow moulding machine according to one of the claims 3 to 18, **characterized in that** the blow wheel (5) is rotatably supported on the frame (8) and/or on a central column (18) connected to said frame and that the heating wheel (3) is rotatably supported on said blow wheel (5).

20. A blow moulding machine according to claim 19, **characterized in that** the blow wheel (5) has formed thereon a toothed rim (35) engaged by pinions (36) which are connected to the rotatable reception means (4) of the heating wheel (3) such that they are secured against rotation relative thereto.

21. A blow moulding machine according to one of the claims 8 to 20, **characterized in that** the transfer device (41) comprises at least three rotors (42, 43, 44) which are connected in series and which are adapted to be driven in synchronism with one another, the first rotor (42) taking the preforms over from the heating wheel (3), the last rotor (44) transferring the preforms to the blow wheel (5) and each intermediate rotor (43) changing the level of the preforms at least partially.

22. A blow moulding machine according to claim 21, **characterized in that** the first rotor (42) rotates on the level of the heating wheel (3) in a substantially horizontal plane, that the last rotor (44) rotates on the level of the blow wheel (5) in a substantially horizontal plane, and that each intermediate rotor (43) rotates in a substantially vertical plane.

23. A blow moulding machine according to claim 21 or 22, **characterized in that** the first (42) and the last rotor (44) are provided with gripping tongs (45, 46) and that at least one intermediate rotor (43) is provided with holding mandrels (47) for the preforms.

24. A blow moulding machine according to claim 23, **characterized in that** the gripping tongs (45, 46) and the holding mandrels (47) are adapted to carry out controlled movements in the rotary plane of their respective rotor (42, 43, 44) and relative to said respective rotor (42, 43, 44).

25. A blow moulding machine according to claim 24, **characterized in that** the gripping tongs (45) of the first rotor (42) are supported in a radially displaceable manner.

26. A blow moulding machine according to claim 24 or 25, **characterized in that** the gripping tongs (46) of the last rotor (44) are supported such that they are radially displaceable and pivotable.

27. A blow moulding machine according to one of the claims 24 to 26, **characterized in that** the holding mandrels (47) of an intermediate rotor (43) are supported such that they are radially displaceable and pivotable.

28. A blow moulding machine according to one of the claims 21 to 27, **characterized in that** the enlargement of the spacing of the preforms is predominantly carried out by the last rotor (44).

29. A blow moulding machine according to one of the claims 1 to 28, **characterized in that** the heating wheel (3) and the blow wheel (5) are each driven by a separate frequency-controlled synchronous motor (48, 49) and that the synchronous motors (48, 49) are connected to a common frequency converter (50).

30. A blow moulding machine according to claim 29, **characterized in that** the supply device (14) and/or the discharge device (16) and/or the transfer device (41) are each driven by a separate frequency-controlled synchronous motor (51, 52), said synchronous motors (51, 52) being connected to a common frequency converter (50).

31. A blow moulding machine according to claim 29 or 30, **characterized in that** the frequency adjustment range of the frequency converter (50) reaches down to 0 hertz.

32. A blow moulding machine according to one of the claims 23 to 31, **characterized in that** the holding mandrels (47) are adapted to be driven such that they rotate about their central axes.

## Revendications

1. Machine à souffler comportant une roue de chauffage (3) présentant plusieurs porte-pièces (4) pour préformes (1) à axe de rotation essentiellement vertical et une roue de soufflage (5) comportant plusieurs stations de soufflage (6) pour corps creux (2) à axe de rotation essentiellement vertical, **caractérisé en ce que** la roue de chauffage (3) et la roue de soufflage (5) sont disposées à des hauteurs différentes et se recouvrent au moins partiellement.

2. Machine à souffler selon la revendication 1, **caractérisée en ce que** la roue de chauffage (3) est disposée plus haut que la roue de soufflage (5) et recouvre celle-ci essentiellement en totalité.

3. Machine à souffler selon la revendication 1 ou 2, **caractérisée en ce que** la roue de chauffage (3) et la roue de soufflage (5) sont disposées de manière concentrique.

4. Machine à souffler selon l'une des revendications 1 à 3, **caractérisée en ce que** la roue de chauffage (3) et la roue de soufflage (5) peuvent être entraînées de manière synchrone dans le même sens de rotation et à des vitesses de rotation différentes.

5. Machine à souffler selon l'une des revendications 1 à 4, **caractérisée en ce que** la roue de chauffage (3) présente un diamètre supérieur à la roue de soufflage (5).

6. Machine à souffler selon l'une des revendications 1 à 5, **caractérisée en ce que** la roue de chauffage (3) et la roue de soufflage (5) sont disposées dans un bâti commun (8).

7. Machine à souffler selon l'une des revendications 1 à 6, **caractérisée en ce que** l'écartement des porte-pièces (4) de la roue de chauffage (3) est inférieure à l'écartement des stations de soufflage de la roue de soufflage (5).

8. Machine à souffler selon l'une des revendications 1 à 7, **caractérisée par** un dispositif de transfert (9), qui amène les préformes du niveau de la roue de chauffage (3) au niveau de la roue de soufflage (5).

9. Machine à souffler selon la revendication 8, **caractérisée en ce que** le dispositif de transfert (9) agrandit l'écartement des préformes.

10. Machine à souffler selon la revendication 8 ou 9, **caractérisée en ce que** le dispositif de transfert (9) comporte un rotor (10) à axe de rotation disposé essentiellement parallèlement à l'axe de rotation (7) de la roue de chauffage (3) et de la roue de soufflage (5), qui peut être entraîné de manière synchrone par rapport à ceux-ci en sens de rotation opposé.

11. Machine à souffler selon la revendication 10, **caractérisée en ce que** le rotor (10) est pourvu de supports (11) commandés mobiles en hauteur, pour les préformes.

12. Machine à souffler selon la revendication 11, **caractérisée en ce que** les supports (11) mobiles en hauteur sont supportés sur des guidages (12), qui sont disposés sur une enveloppe conique disposée de manière concentrique par rapport à l'axe de rotation du rotor (10).

13. Machine à souffler selon l'une des revendications 10 à 12, **caractérisée en ce que** le rotor (10) est pourvu de supports (13) commandés, montés pivotants dans le sens de rotation, pour les préformes.

14. Machine à souffler selon l'une des revendications 8 à 13, **caractérisée en ce qu'**un dispositif d'alimentation (14) pour les préformes est disposé en amont du dispositif de transfert (9), sur le périmètre de rotation de la roue de chauffage (3).

15. Machine à souffler selon la revendication 14, **caractérisée en ce que** le dispositif d'alimentation (14) comporte une route de retournement (15), qui reçoit les préformes en position normale debout, les fait pivoter sur 180 degrés et les transfère avec l'ouverture vers le bas sur les porte-pièces (4) de la roue de chauffage (3).

16. Machine à souffler selon l'une des revendications 8 à 15, **caractérisée en ce qu'**un dispositif d'évacuation (16) pour les corps creux finis est disposé en aval du dispositif de transfert (9) sur le périmètre de rotation de la roue de soufflage (5).

17. Machine à souffler selon la revendication 16, **caractérisée en ce que** le dispositif d'évacuation (16) comporte une roue de retournement (17), qui prélève les corps creux finis avec l'ouverture vers le bas, des stations de soufflage (6), les fait pivoter sur 180 degrés et les transfère en position normale debout.

18. Machine à souffler selon l'une des revendications 8 à 17, **caractérisée en ce que** le dispositif de transfert (9) est disposé entre le dispositif d'alimentation (14) et le dispositif d'évacuation (16), de préférence sur le côté de pilotage (23) du bâti (8).

19. Machine à souffler selon l'une des revendications 3 à 18, **caractérisée en ce que** la roue de soufflage (5) est supportée en rotation sur le bâti (8) et/ou sur une colonne centrale reliée à celui-ci (18) et la roue de chauffage (3) est supportée en rotation sur la roue de soufflage (5).

20. Machine à souffler selon la revendication 19, **caractérisée en ce que** sur la roue de soufflage (5) est formée une couronne dentée (35) dans laquelle viennent en prise des pignons (36) assemblés fixes en rotation avec les porte-pièces rotatifs (4) de la roue de chauffage (3).

21. Machine à souffler selon l'une des revendications 8 à 20, **caractérisée en ce que** le dispositif de transfert (41) comporte au moins trois rotors (42, 43, 44) pouvant être entraînés de manière synchrone, montés en ligne, dont le premier rotor (42) reçoit les préformes de la roue de chauffage (3), le dernier rotor (44) transfère les préformes à la roue de soufflage (5) et chaque rotor intermédiaire (43) modifie au moins partiellement la position en hauteur des préformes.

22. Machine à souffler selon la revendication 21, **caractérisée en ce que** le premier rotor (42) tourne à hauteur de la roue de soufflage (3) dans un plan essentiellement horizontal, **en ce que** le dernier rotor (44) tourne à hauteur de la roue de soufflage (5) dans un plan essentiellement horizontal, et **en ce que** chaque rotor intermédiaire (43) tourne dans un plan essentiellement vertical.

23. Machine à souffler selon l'une des revendications 21 ou 22, **caractérisée en ce que** le premier et le dernier rotor (42, 44) est pourvu de pinces de préhension (45, 46) et au moins un rotor intermédiaire (43) est pourvu de mandrins de maintien (47) pour les préformes.

24. Machine à souffler selon la revendication 23, **caractérisée en ce que** les pinces de préhension (45, 46) et les mandrins de maintien (47) sont commandés mobiles dans le plan de rotation de leur rotor (42, 43, 44) par rapport à celui-ci.

25. Machine à souffler selon la revendication 24, **caractérisée en ce que** les pinces de préhension (45) du premier rotor (42) sont supportées en translation radiale.

26. Machine à souffler selon la revendication 24 ou 25, **caractérisée en ce que** les pinces de préhension (46) du dernier rotor (44) sont supportées en translation radiale et en pivotement.

27. Machine à souffler selon l'une des revendications 24 à 26, **caractérisée en ce que** les mandrins de maintien (47) d'un rotor intermédiaire (43) sont supportés en translation radiale et en pivotement.

28. Machine à souffler selon l'une des revendications 21 à 27, **caractérisée en ce que** l'augmentation de l'écartement des préformes provient principalement du dernier rotor (44).

29. Machine à souffler selon l'une des revendications 1 à 28, **caractérisée en ce que** la roue de chauffage (3) et la roue de soufflage (5) sont chacune entraînées par un moteur synchrone (48, 49) propre commandé par fréquence et les moteurs synchrones (48, 49) sont connectés à un convertisseur de fréquences (50) commun.

30. Machine à souffler selon la revendication 29, **caractérisée en ce que** le dispositif d'alimentation (14) et/ou le dispositif d'évacuation (16) et/ou le dispositif de transfert (41) sont chacun entraînés par un propre moteur synchrone (51, 52) commandé par fréquence, qui sont connectés au redresseur de fréquences (50) commun.

31. Machine à souffler selon la revendication 29 ou 30, **caractérisée en ce que** la plage de réglage des fréquences du redresseur de fréquences (50) s'étend jusqu'à zéro Hertz.

32. Machine à souffler selon l'une des revendications 23 à 31, **caractérisée en ce que** les mandrins de maintien (47) peuvent être entraînés en rotation autour de leurs axes médians.
